# EUROPÄISCHE PATENTSCHRIFT

(11) **EP 4 401 915 B1**
(45) Veröffentlichungstag und Bekanntmachung des Hinweises auf die Patenterteilung: **22.04.2026**
(21) Anmeldenummer: 22789166.0
(22) Anmeldetag: 12.09.2022
(51) Int. Cl.: B23K 26/14, B23K 26/06, B23K 26/16, B23K 26/21, B23K 26/36, B23K 26/70

(54) **LASERBEARBEITUNGSKOPF MIT KLEBEFALLE**
LASER MACHINING HEAD HAVING AN ADHESIVE TRAP
TÊTE D'USINAGE AU LASER AVEC PIÈGE ADHÉSIF

(30) Priorität: 13.09.2021 DE 102021123617
(43) Veröffentlichungstag der Anmeldung: 24.07.2024
(73) Patentinhaber: Precitec GmbH & Co. KG, 76571 Gaggenau (DE)
(72) Erfinder: HERZOG, Marius, 77887 Sasbachwalden (DE); WEBER, Ludwig, 76593 Gernsbach (DE)
(74) Vertreter: Ter Meer Steinmeister & Partner
(86) Internationale Anmeldenummer: PCT/EP2022/075296
(87) Internationale Veröffentlichungsnummer: WO 2023/036985

(56) Entgegenhaltungen:
- EP-A1- 3 834 978
- JP-A- 2002 361 467
- US-A1- 2009 308 851
- US-A1- 2011 151 252

## Beschreibung

Die vorliegende Erfindung betrifft einen Laserbearbeitungskopf mit mindestens einer Klebefälle, wie im Oberbegriff von Anspruch 1 angegeben (siehe z. B. EP 3834 978 A1).

### Hintergrund und Stand der Technik

Mit Hilfe eines Laserbearbeitungssystems wird der von einer Laserstrahlquelle oder einem Ende einer Laserleitfaser austretende Laserstrahl auf ein zu bearbeitendes Werkstück fokussiert. Die Bearbeitung kann ein Laserstrahlschweißen oder ein Laserschneiden sein. Ein integraler Bestandteil des Laserbearbeitungssystems ist der Laserbearbeitungskopf, der beispielsweise als Laserschweißkopf oder Laserschneidkopf konfiguriert sein kann.

Laserbearbeitungsköpfe sind in verschiedenen Ausführungsformen bereits aus dem Stand der Technik bekannt. Üblicherweise weist der Laserbearbeitungskopf ein Gehäuse auf, in dem mindestens eine Optik zum Führen und/oder Formen des Laserstrahls angeordnet ist, insbesondere eine Kollimationsoptik und eine Fokussieroptik. Die Kollimationsoptik dient zum Kollimieren eines divergent in den Laserbearbeitungskopf eingebrachten Laserstrahls aus einer Laserstahlquelle. Die Fokussieroptik trägt zur Fokussierung des Laserstrahls auf die Oberfläche eines Werkstücks bei. Die Kollimationsoptik und die Fokussieroptik können einen Strahlengang des Laserstrahls im Gehäuse des Laserbearbeitungskopfs definieren. Kollimation und Fokussierung dienen also dazu, den Laserstrahl so zu formen, dass dieser für einen Laserbearbeitungsprozess, etwa ein Laserstrahlschweißen oder ein Laserstrahlschneiden, geeignet ist.

Um einen einwandfreien Betrieb des Laserbearbeitungskopfs zu gewährleisten, sollte die Anzahl an Partikeln und Schwebeteilchen im Innenraum des Gehäuses, auch Optikraum genannt, bzw. im Strahlengang des Laserstrahls minimiert und auf absolute Sauberkeit der mindestens einen im Gehäuse des Laserbearbeitungskopfs angeordneten Optik geachtet werden.

Denn die optischen Elemente der Optik erwärmen sich durch erhöhte Absorption des Laserstrahls, wenn sich Partikel auf ihrer Oberfläche ablagern und ansammeln. Infolgedessen ändern sich die optischen Eigenschaften, beispielsweise die Brechungseigenschaften einer in der Optik enthaltenen Linse. Mit zunehmender Verunreinigung kann sich daher die Brennweite ändern, was dazu führt, dass sich der Fokus verschiebt. Dieser Effekt ist auch als thermische Fokusverschiebung (engl. "thermal focus shift") bekannt und sollte mit Blick auf einen stabilen Betrieb des Laserbearbeitungskopfs vermieden werden.

Zudem ist eine Reduktion von Schwebeteilchen im Innenraum des Laserbearbeitungskopfs wünschenswert, da jedes Teilchen, das sich im Strahlengang des Laserstrahls befindet, sich auf Optiken absetzen und somit auch zur o.g. thermischen Linse oder zum Ausfall des Gesamtsystems durch Zerstörung der Optik beitragen kann.

Den oben beschriebenen Anforderungen konnte bislang nur in begrenztem Umfang Rechnung getragen werden.

Ein Ansatz zur Vorbeugung von Partikelablagerungen ist die Anordnung von Schutzgläsern im Laserbearbeitungskopf. Die Schutzgläser können zwar Eintritt von Schmutzpartikeln weitgehend verhindern, bieten aber keine Handhabe gegen bereits im Innenraum vorhandene bzw. dort entstehende Schmutzpartikel.

Eine andere Maßnahme besteht darin, die Entstehung von Partikeln und Schwebeteilchen bereits während der Fertigung des Laserbearbeitungskopfs zu vermeiden. Der Zusammenbau des Laserbearbeitungskopfs kann beispielsweise unter Reinraumbedingungen erfolgen. In dieser Weise kann die initial im Innenraum des Laserbearbeitungskopfs vorhandene Partikelkonzentration verringert werden. Es gibt jedoch bei der Fertigung des Laserbearbeitungskopfs einige Schritte, beispielsweise Fügeverfahren, bei denen unweigerlich Partikel und/oder Schwebeteilchen freigesetzt werden. Auch während des Betriebs des Laserbearbeitungskopfs entstehen Partikel in Form von metallischem Abrieb oder als Abrieb von gealterten, spröden Gummidichtungen, beispielsweise durch Bewegung von verstellbaren optischen Elementen im Innenraum des Gehäuses und die damit verbundene Reibung.

Generell kann auch das hermetisch dichte Verschließen und die vorherige Reinigung aller Innenflächen zu einer Verringerung der Konzentration an Partikeln im Innenraum des Laserbearbeitungskopfs beitragen. Dabei ist jedoch zu berücksichtigen, dass nicht jedes Hilfsmittel für die Reinigung verwendet werden kann. Reinigungstücher hinterlassen beispielsweise Fasern, die sich ebenfalls auf Oberflächen von optischen Elementen ablagern und ähnliche Probleme verursachen können wie die Partikel.

Weiterhin ist aus der JP 2002 361467 A ein Laserbearbeitungssystem mit einer Linse und einem Klebstoff bekannt, wobei der Klebstoff die Funktion eines Staubfängers übernimmt. Auch die US 2009/308851 A1 offenbart eine Laservorrichtung zum Bearbeiten von Werkstücken, in der eine Schmutzabsorberfolie zum Einsatz kommt, um Verschmutzungen des Strahlführungsraums entgegenzuwirken.

Angesichts der obigen Ausführungen wird deutlich, dass es noch Verbesserungsbedarf bei der dauerhaften Reinhaltung der Optik, die im Gehäuse des Laserbearbeitungskopfs enthalten ist, bzw. des Optikraums des Laserbearbeitungskopfs gibt. Besonders problematisch ist der während des Betriebs des Laserbearbeitungskopfs immer wieder neu entstehende Abrieb, der höchstens in einer Wartungsprozedur, bei welcher der Innenraum des Laserbearbeitungskopfs geöffnet werden müsste, beseitigt werden kann. Ein Öffnen des Laserbearbeitungskopfs allein zur Entfernung von Partikeln ist aber nicht praktikabel und führt zu unerwünschtem Maschinenstillstand.

### Zusammenfassung der Erfindung

Die vorliegende Erfindung hat sich daher zur Aufgabe gemacht, einen Laserbearbeitungskopf zu entwickeln, der die im Stand der Technik vorhandenen Nachteile überwindet. Daneben ist es Aufgabe, ein Laserbearbeitungssystem anzugeben, das die oben geschilderten Probleme löst. Eine weitere Aufgabe der vorliegenden Erfindung ist, einen Laserbearbeitungskopf und ein Laserbearbeitungssystem bereitzustellen, bei dem eine thermische Fokusverschiebung verursacht durch Partikelablagerung auf den optischen Flächen reduziert ist. Eine weitere Aufgabe der vorliegenden Erfindung ist, einen Laserbearbeitungskopf bereitzustellen, in dem während des Betriebs bzw. ohne Maschinenstillstand oder Öffnen des Optikraums eine Anzahl von losen Partikeln im Optikraum reduziert werden kann.

Zumindest eine dieser Aufgaben wird durch einen Laserbearbeitungskopf des unabhängigen Anspruch 1 gelöst. Vorteilhafte Ausgestaltungen sind in den weiteren abhängigen Ansprüchen definiert.

Der erfindungsgemäße Laserbearbeitungskopf umfasst ein Gehäuse, mindestens eine im Innenraum des Gehäuses angeordnete Optik zur Manipulation eines Laserstrahls und mindestens eine im Innenraum des Gehäuses angeordnete Klebefalle zum Immobilisieren von Partikeln. Gemäß der vorliegenden Erfindung können Partikel im Innenraum des Gehäuses gebunden bzw. immobilisiert werden, sodass sich diese nicht mehr auf optischen Grenzflächen ablagern können. Dadurch kann das Risiko für eine thermische Fokusverschiebung oder eine unerwünschte Erwärmung der Optik reduziert werden.

Die Klebefalle kann die Partikel durch Adhäsion binden bzw. immobilisieren. Die Klebefalle ist bevorzugt so gestaltet, dass sie Partikel und/oder Schwebeteilchen durch ihre hohe Adhäsionskraft langfristig binden kann. Partikel, die sich im Innenraum des Laserbearbeitungskopfs befinden und die durch Bewegung des Bearbeitungskopfs oder durch andere äußere Einflüsse, z.B. durch Erschütterung, ihre Position verändern, kommen irgendwann in Kontakt mit der Klebefalle und werden dort gebunden bzw. festgehalten. Partikel, die durch Abrieb beim Betrieb des Laserbearbeitungskopfs entstehen, folgen der Schwerkraft und können dadurch direkt nach ihrer Entstehung in Berührung mit der Klebefalle kommen.

Der Innenraum des Gehäuses kann auch als Optikraum des Gehäuses bzw. des Laserbearbeitungskopfs bezeichnet werden. Der Innenraum des Gehäuses kann nach außen, z.B. durch Dichtungen und/oder ein Schutzglas abgedichtet sein. Diese Maßnahmen schützen vor Staub- oder Schmutzeintrag aus der Umgebung. Weiterhin kann der Innenraum des Gehäuses gasdicht sein. Der Laserbearbeitungskopf kann für die Bearbeitung eines Werkstücks, insbesondere eines metallischen Werkstücks, mittels eines Bearbeitungslaserstrahls vorgesehen sein, beispielsweise für ein Laserschneiden, Laserschweißen, Laserlöten, Laserbohren und ähnliches.

Die Klebefalle ist vorzugsweise außerhalb des Strahlengangs des Laserstrahls angeordnet. Mit anderen Worten ist die Klebefalle während der Laserbearbeitung dem Laserstrahl vorzugsweise nicht oder zumindest nicht direkt ausgesetzt.

Durch die Bereitstellung einer Klebefalle im Innenraum des Laserbearbeitungskopfs verringert sich zwar nicht die absolute Partikelanzahl, jedoch werden die Partikel zuverlässig immobilisiert. Sie können sich also nicht mehr auf der Optik absetzen. Auch Schwebepartikel werden bei Kontakt mit der Klebefalle immobilisiert.

In einer Ausführungsform umfasst die Klebefalle mindestens eine Klebemittelschicht oder besteht daraus. Beispielsweise kann die Klebefalle eine Klebefolie mit zumindest einer im Innenraum freiliegenden Klebemittelschicht umfassen. Die mindestens eine Klebemittelschicht liegt in dem Gehäuse bevorzugt unbedeckt vor, was bedeutet, dass sie nicht mit einer Schutzfolie versehen ist. Des Weiteren ist die Klebemittelschicht in einer Ausführungsform freiliegend im Innenraum bzw. auf einer freien Fläche im Innenraum angeordnet, also exponiert und für Partikel bzw. die Atmosphäre im Innenraum des Gehäuses frei zugänglich.

Die Klebefalle umfasst eine doppelseitige Klebefolie. Vorzugsweise ist die Klebemittelschicht Teil der doppelseitigen Klebefolie. In einer bevorzugten Ausführungsform besteht die Klebefalle aus einer doppelseitigen Klebefolie. Die doppelseitige Klebefolie kann eine Trägerfolie sein, deren gegenüberliegende Seiten mit jeweils einer Klebemittelschicht beschichtet sind. Mit einer der Klebemittelschichten kann die Klebefalle bzw. die doppelseitige Klebefolie auf der Fläche im Innenraum befestigt sein. Die andere der der Klebemittelschichten kann im Innenraum freiliegen. Die Klebemittelschichten können aus gleichen oder unterschiedlichen Materialien geformt sein. Eine Klebefalle, welche eine Trägerfolie sowie zwei auf unterschiedlichen bzw. gegenüberliegenden Seiten der Trägerfolie angeordnete aber ansonsten identische Klebemittelschichten umfasst, ist bevorzugt. Durch die Gleichartigkeit der Klebemittelschichten kann die Klebefalle mit minimalem Materialeinsatz hergestellt werden. Die Produktion der Klebefalle beschränkt sich dann darauf, eine Reaktionsmischung auf beide Seiten einer kommerziell erhältlichen Trägerfolie aufzubringen und diese nach abgeschlossener Vernetzungsreaktion zurecht zu stanzen. Die Mischung kann ein Acrylat (zum Beispiel Methylmethacrylat) als Monomer, einen Vernetzer und gegebenenfalls verschiedene Additive enthalten.

Die Klebefalle kann ein Stanzteil umfassen, vorzugsweise eine gestanzte Klebefolie mit zumindest einer im Innenraum freiliegenden Klebemittelschicht. Das Stanzteil ist direkt einsatzbereit und kann an der vorgesehenen Stelle im Gehäuse montiert bzw. angebracht werden. Bevorzugt erfolgt die Anbringung der Klebefalle erst am Ende der Montage des Laserbearbeitungskopfs, nämlich kurz vor dem Abdichten des Gehäuseinnenraums. So kann die Gefahr einer Verschmutzung bzw. Inaktivierung der Klebefalle minimiert werden.

Vorzugsweise enthält die Klebefalle bzw. die Klebemittelschicht eine Acrylatfolie. Vorzugsweise enthält die Klebefalle bzw. die Klebemittelschicht ein Acrylat, beispielsweise mindestens 20 Gew.-%, besonders bevorzugt mindestens 30 Gew.-%, ganz besonders bevorzugt mindestens 35 Gew. % eines Acrylats, jeweils bezogen auf das Gesamtgewicht der Klebefalle. Bezogen auf das Gesamtgewicht der Klebemittelschicht enthält die Klebefalle bevorzugt mindestens 80 Gew.-% eines Acrylats, insbesondere 90 Gew.-%.

Acrylat bzw. modifiziertes Acrylat (das modifizierte Acrylat wird bei Verwendung der optionalen Additive erhalten) ist als Material für die Klebemittelschicht geeignet, weil es eine hohe Adhäsionskraft aufweist. Für Stahl beträgt die Adhäsionskraft vorzugsweise mindestens 10,5 N/cm und/oder für Aluminium vorzugsweise mindestens 8,0 N/cm (gemessen direkt nach Aufbringen auf die Trägerfolie). Außerdem weist es eine hervorragende Beständigkeit gegen Hitze und Lichteinstrahlung auf. Wird eine Klebefalle mit einer Acrylat-basierten Klebemittelschicht mehrere Tage den Bedingungen eines Dauerschneide-Tests ausgesetzt, verringert sich die Haltekraft auf Stahl oder Aluminium nicht.

Bemerkenswert ist auch, dass Klebefallen mit einer Acrylat-basierten Klebemittelschicht keine messbare Ausgasung aufweisen. Nachdem eine Klebefalle mit Acrylat-basierter Klebemittelschicht eine Woche lang in einem geschlossenen Gefäß bei 75°C gelagert wurde, ist an den Wänden des Gefäßes keinerlei Beschlag oder Tröpfchenbildung zu erkennen.

Wie bereits oben erläutert, kann die Klebefalle außer der mindestens einen Klebemittelschicht noch weitere Schichten umfassen. Bevorzugt ist es, wenn sie neben der mindestens einen Klebemittelschicht eine Trägerfolie umfasst. Beispielsweise enthält oder besteht die Trägerfolie aus einem aromatischen Polyester oder einem Polyolefin. Daher umfasst die Klebefalle in einer Ausführungsform bezogen auf das Gesamtgewicht der Klebefalle mindestens 20 Gew.-% eines Polymers ausgewählt aus der Gruppe bestehend aus einem aromatischen Polyester, insbesondere PET; und einem Polyolefin, insbesondere Polypropylen. Der Anteil dieses Polymers am Gesamtgewicht der Klebefalle beträgt besonders bevorzugt 30 Gew.-% oder mehr, insbesondere 35 Gew. % oder mehr. Ebenfalls bevorzugt ist, wenn das besagte Polymer nicht mehr als 70 Gew.-% des Gesamtgewichts der Klebefalle ausmacht, bevorzugt nicht mehr als 60 Gew.-%.

Was die Abmessungen angeht, weist die Klebefalle bevorzugt eine Dicke von maximal 5000 µm auf, besonders bevorzugt maximal 1000 µm. Dies stellt sicher, dass die Klebefalle im Gehäuse des Laserbearbeitungskopfs nicht zu viel Platz einnimmt. Um die Anordnung im Gehäuse zu ermöglichen, darf die Klebefalle aber auch nicht zu dünn sein. Insbesondere muss sie eine gewisse Formstabilität und Reißfestigkeit haben. Daher ist es von Vorteil, wenn die Klebefalle eine minimale Dicke von 100 µm aufweist. Wenn die Klebefalle eine Klebemittelschicht umfasst, dann ist die Schichtdicke der Klebemittelschicht im Bereich von 20 µm bis 5000 µm, bevorzugt im Bereich von 50 µm bis 1000 µm.

Die Klebefalle kann eine konstante Dicke aufweisen. Insbesondere kann die Schickdicke einer in der Klebefalle enthaltenen Klebemittschicht konstant sein. Dies kann bei der Produktion von doppelseitig beschichteten Klebefolien einfacher zu realisieren sein, als bei einer direkten Beschichtung von Gehäuseteilen des Laserbearbeitungskopfs.

Die mindestens eine im Gehäuse enthaltene Optik, deren Verschmutzung vermieden werden soll, kann ein Faserkoppler sein, eine Strahlführungsoptik und/oder eine Strahlformungsoptik, insbesondere eine Fokussieroptik und/oder eine Kollimationsoptik. Generell kann die im Gehäuse enthaltene Optik eine Linse, eine Linsengruppe, eine Kollimationslinse, eine Fokussierlinse, ein transmissives Element, ein reflektives Element, einen Strahlteiler, einen Spiegel, ein Strahlformungselement und/oder einen optischen Keil umfassen. Bevorzugt ist die mindestens eine im Gehäuse enthaltene Optik ausgewählt aus einer Fokussieroptik, einer Kollimationsoptik und/oder einem Spiegel.

Außerdem enthält das Gehäuse des Laserbearbeitungskopfs ein bewegliches Element, insbesondere ein verstellbares Element. Die Klebefalle ist benachbart zum Bewegungsmechanismus des beweglichen Elements angeordnet, d. h. entsprechend der Erfindung, wenn der größte Abstand zwischen dem Bewegungsmechanismus und der Klebefalle kleiner ist als 10 cm, insbesondere kleiner als 5 cm. Ein verstellbares Element im Sinne der vorliegenden Erfindung ist ein Element, dessen Position und/oder Orientierung durch eine Steuerung gezielt und unabhängig von der Schwerkraft eingestellt werden kann. Unter einem beweglichen Element sind verstellbare Elemente sowie Elemente zu verstehen, die unkontrolliert durch äußere Krafteinwirkung zur Bewegung angeregt werden.

Das bewegliche Element ist Teil der bereits erwähnten Optik, die in dem Gehäuse enthalten ist. Bei Anwesenheit eines beweglichen Elements kommt es tendenziell häufiger zur Freisetzung neuer Partikel während des Betriebs des Laserbearbeitungskopfs. Sobald sich die relative Position oder Orientierung des Elements ändert, werden angrenzende Gummidichtungen beansprucht oder es kommt zu Reibung zwischen zwei metallischen Bauteilen. Beides kann entweder zum Abplatzen von Fragmenten oder zum Abrieb einzelner Partikel führen. Im Unterschied zu herkömmlichen Laserbearbeitungsköpfen können die neu entstandenen Partikel in dem erfindungsgemäßen Laserbearbeitungskopf nun durch die Klebefalle immobilisiert werden.

Die Optik und/oder das bewegliche Element kann über eine Halterung mit dem Gehäuse verbunden sein. In diesem Fall kann sich die Klebefalle in räumlicher Nähe zu der Halterung befinden.

In einer ersten bevorzugten Ausführungsvariante umfasst die Optik eine Fokussieroptik und/oder eine Kollimationsoptik sowie ein bewegliches Element. Das bewegliche Element kann dabei ein verstellbares Element sein. Die Optik kann eine Halterung aufweisen, über die sie mit dem beweglichen Element verbunden ist. Das bewegliche Element kann einen Schlitten eines Bandantriebs, der von einem Motor antreibbar und an einer Führungsschiene verschiebbar geführt ist, umfassen. Ein solcher Aufbau ist beispielsweise in der DE 10 2014 101 477 A1 im Detail beschrieben. In dieser Variante ist die Klebefalle vorteilhafterweise in Ausbreitungsrichtung des Laserstrahls unterhalb der Bandtrommel des Bandantriebs und der Führungsschiene aber vorzugsweise außerhalb des Laserstrahlengangs angeordnet. Bevorzugt ist insbesondere, wenn die Klebefalle auf einer Innenfläche des Gehäuses oder eines Gehäuseabschnittes aufgebracht ist, die senkrecht zur Ausbreitungsrichtung des Laserstrahls verläuft. Zusätzlich oder alternativ können aber auch weitere Flächen, z.B. Innenflächen des Gehäuses, die parallel zur Ausbreitungsrichtung des Laserstrahls angeordnet sind, mit einer Klebefalle bestückt sein.

In einer zweiten bevorzugten Ausführungsvariante umfasst die Optik mindestens einen Spiegel, der mit Hilfe eines verstellbaren Elements um unterschiedliche Rotationsachsen drehbar ist. In dieser Variante ist die Klebefalle vorteilhafterweise in Ausbreitungsrichtung des Laserstrahls unterhalb von dem mindestens einen Spiegel aber vorzugsweise außerhalb des Laserstrahlengangs angeordnet, beispielsweise auf einer Innenfläche des Gehäuses oder eines Gehäuseabschnittes, die senkrecht zur Ausbreitungsrichtung des Laserstrahls verläuft. Diese zweite bevorzugte Ausführungsvariante ist besonders dann von Bedeutung, wenn der Laserbearbeitungskopf eine Scannereinheit bzw. Ablenkvorrichtung umfasst. Eine solche Ablenkvorrichtung ist eingerichtet, um den Bearbeitungslaserstrahl entlang mindestens einer Achse senkrecht zu seiner Ausbreitungsrichtung abzulenken. Dies ermöglicht bei Bearbeitung eines Werkstücks ein Abrastern einer Werkstückoberfläche in einem Scanfeld.

Die Optik kann eine Halterung aufweisen, die im Innenraum des Gehäuses angeordnet ist. Die Halterung der Optik kann eine Fassung der Optik umfassen. Bevorzugt stellt die Halterung der Optik eine Verbindung zu einer Kassette her, die die Optik enthält und in ein dafür vorgesehenes Fach im Gehäuse des Laserbearbeitungskopfs eingeschoben ist. Die Klebefalle kann auf einer Oberseite und/oder auf einer während der Laserbearbeitung nach oben weisenden Fläche der Halterung oder der Kassette unterhalb der Optik angeordnet sein. Mit anderen Worten kann die Klebefalle so im Innenraum des Laserkopfes angeordnet sein, dass sie während der Laserbearbeitung aufgrund der Schwerkraft nach unten fallende Partikel immobilisieren kann.

Hierzu kann die Klebefalle auf einer freien Oberfläche der Halterung oder Kassette aufgebracht sein, insbesondere auf einer Oberfläche, die während der vorgesehenen Verwendung des Laserbearbeitungskopfs im Innenraum horizontal angeordnet ist und/oder in der unteren Hälfte des Innenraums positioniert ist. Als "freie (Ober)fläche" wird hier eine (Ober)fläche bezeichnet, die im Innenraum des Gehäuses frei liegt bzw. für Partikel frei zugänglich ist. Alternativ oder zusätzlich kann die Klebefalle auf einer unmittelbar an die Halterung angrenzenden Innenfläche des Gehäuses oder der Kassette angeordnet sein. Die angrenzende Innenfläche des Gehäuses ist dabei bevorzugt eine passive Fläche, die lediglich zur Begrenzung des Gehäuses dient und/oder die nicht im Strahlengang des Laserstrahls liegt.

Die Klebefalle kann auf einer Fläche, beispielsweise einer Innenfläche aufgebracht sein, die den Innenraum zumindest teilweise definiert, und/oder die zumindest einen Teil einer Umfangsfläche des Innenraums bildet, und/oder die sich parallel zur optischen Achse der Optik und/oder zur Ausbreitungsrichtung des Laserstrahls erstreckt. Diese Innenfläche kann Teil des Gehäuses des Laserbearbeitungskopfs sein oder Teil einer Kassette, die in das Gehäuse eingeschoben ist.

Mindestens eine Klebefalle kann auf einer planaren Fläche im Innenraum, insbesondere auf einer planaren Innenfläche des Gehäuses oder einer Kassette, aufgebracht sein, um die Aufbringung der Klebefalle zu erleichtern. Die Klebefolie kann aber auch auf einer gekrümmten bzw. gewölbten Fläche aufgebracht sein, wie beispielsweise auf einem Teil einer Umfangsfläche des Innenraums.

Des Weiteren ist bevorzugt, wenn die Innenfläche, auf der die mindestens eine Klebefalle angeordnet ist, während der vorgesehenen Verwendung des Laserbearbeitungskopfs eine horizontal angeordnete, nach oben weisende bzw. den Innenraum nach unten begrenzende Fläche ist. So können neu entstandene Partikel, deren Bewegung der Schwerkraft folgt, direkt eingefangen werden.

Die Klebefalle kann auf einer Fläche aufgebracht sein, die sich senkrecht zur optischen Achse der Optik und/oder zur Ausbreitungsrichtung des Laserstrahls erstreckt, und/oder die einem Laserstrahleinkopplungspunkt, z.B. einem Faserkoppler, zugewandt ist, und/oder die während der vorgesehenen Verwendung des Laserbearbeitungskopfs, d.h. während der Laserbearbeitung, den Innenraum zumindest teilweise nach unten begrenzt, und/oder die während der Laserbearbeitung nach oben weist. Die Klebefalle kann auf einer Fläche im Innenraum aufgebracht sein, die in Laserstrahlausbreitungsrichtung vorne bzw. oben liegt. Insbesondere kann die Klebefalle so im Innenraum angeordnet sein, dass sie während der Laserbearbeitung nach unten fallende Partikel immobilisieren kann.

In einer weiteren Ausführungsform ist die mindestens eine Klebefalle auf einer im Wesentlichen planaren oder stufenlosen Innenfläche des Gehäuses oder einer Kassette aufgebracht, die sich in einem Winkel im Bereich von 85 bis 95° relativ zur Ausbreitungsrichtung des Laserstrahls erstreckt, insbesondere senkrecht zur Ausbreitungsrichtung des Laserstrahls. Die Klebefalle kann in dieser Ausführungsform nicht vollflächig, sondern nur bereichsweise aufgebracht sein. Dadurch kann vermieden werden, dass die Klebefalle im Strahlengang des Laserstrahls angeordnet ist. Mit anderen Worten kann die Klebefalle eine Aussparung aufweisen, die einer Öffnung der Fläche zum Durchtritt des Laserstrahlengangs entspricht.

Mindestens eine Klebefalle kann auf einer Innenfläche des Gehäuses oder einer Kassette aufgebracht sein, die eine Nut aufweist. Die Nut ist bevorzugt eine umlaufende Nut für die Aufnahme eines Dichtungselements. Besonders bevorzugt ist die Nut eine Ringnut, welche sich zur Aufnahme einer Ringdichtung, beispielsweise eines O-Rings, eignet. Wenn die Klebefalle auf einer solchen Innenfläche des Gehäuses aufgebracht ist, kann die Form der Klebefalle an die Form der Nut angepasst sein. Die Form der Klebefalle ist insbesondere so angepasst, dass sie auf die Innenfläche aufgebracht werden kann, ohne die Nut zu bedecken. Vorteilhafterweise wird die Klebefalle nur in einem Bereich innerhalb der umlaufenden Nut bzw. der Ringnut auf der Innenfläche platziert.

Auch auf Bohrungen und Öffnungen in der Fläche, auf der die Klebefalle aufgebracht ist, wird in einer Ausführungsform der Erfindung Rücksicht genommen. Bevorzugt ist nämlich, dass die Klebefalle eine oder mehrere Aussparungen entsprechend von Bohrungen und/oder Öffnungen in der Fläche aufweist.

Durch die spezielle Geometrie des Laserbearbeitungskopfs können somit insgesamt hohe Anforderungen an die Form der Klebefalle entstehen. Dies ist aber unproblematisch, da die Klebefallen als Stanzteile auch ohne Weiteres in komplexeren Formen hergestellt werden können.

Bevorzugt weist die Klebefalle eine Mindestfläche auf. Befindet sich nur eine Klebefalle im Innenraum des Gehäuses, hat die Klebefalle vorzugsweise eine Fläche von mindestens 10 cm². Es wurde gefunden, dass eine Klebefalle mit einer Fläche von weniger als 10 cm² nicht so effektiv Partikel immobilisieren kann. Die maximale Fläche der Klebefalle ist bevorzugt 500 cm². Dieser Wert ist durch die Abmessungen des Laserbearbeitungskopfs und durch die Anzahl an passiven Innenflächen, vorgegeben. Befinden sich mehrere Klebefallen im Innenraum des Gehäuses gelten die oben genannten Grenzwerte für die Gesamtfläche, welche die Mehrzahl an Klebefallen zusammen einnimmt.

Vorzugsweise ist die Klebefalle nur an Flächen angebracht, an denen keine schadhafte LaserStrahlung zu erwarten ist. Vorzugsweise ist die Klebefalle so angebracht, dass eine Fügung der Teile nicht behindert wird.

In einer ebenfalls bevorzugten Ausführungsform umfasst die Klebefalle mindestens eine Klebemittelschicht, die eine Fläche von mindestens 5 cm² aufweist.

### Kurzbeschreibung der Zeichnungen

Bevorzugte Ausführungsformen der Erfindung werden unter Bezugnahme auf die nach-folgenden Figuren und Daten näher erläutert, ohne die Erfindung darauf beschränken zu wollen.
Fig. 1 zeigt ein Laserbearbeitungssystem mit einem Laserbearbeitungskopf gemäß einer ersten Ausführungsform der vorliegenden Erfindung;
Fig. 2 ist eine Draufsicht auf eine Halterung für eine Optik, auf der eine Klebefalle angeordnet ist, gemäß einer Ausführungsform der vorliegenden Erfindung;
Fig. 3 zeigt ein Laserbearbeitungssystem mit einem Laserbearbeitungskopf gemäß einer zweiten Ausführungsform der vorliegenden Erfindung;
Fig. 4 zeigt ein Laserbearbeitungssystem mit einem Laserbearbeitungskopf gemäß einer dritten Ausführungsform der vorliegenden Erfindung.

### Detaillierte Beschreibung der Zeichnungen

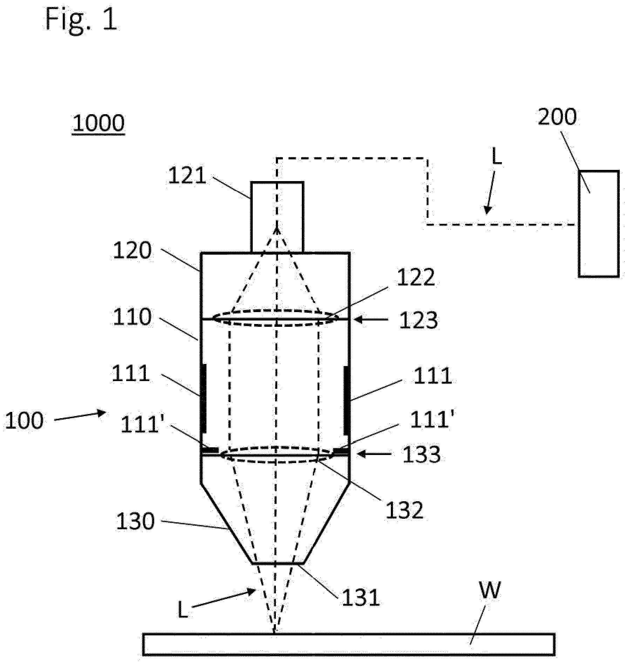

Das in Fig. 1 gezeigte Laserbearbeitungssystem 1000 umfasst eine Laserquelle 200 und einen Laserbearbeitungskopf 100.

Die Laserquelle 200 kann einen Bearbeitungslaserstrahl L (Laserstrahl) erzeugen. Die Laserquelle 200 kann als Single-Mode-Laser, als Festkörperlaser oder als Faserlaser ausgebildet sein.

Der Laserbearbeitungskopf 100 umfasst ein Gehäuse, das in verschiedene Abschnitte gegliedert sein kann. Das Gehäuse kann einen zentralen ersten Gehäuseabschnitt 110 umfassen. Dieser erste Gehäuseabschnitt 110 kann Innenflächen aufweisen, die jeweils mit einer Klebefalle 111 versehen sind. Zusätzlich kann der Laserbearbeitungskopf 100 einen zweiten Gehäuseabschnitt 120 und/oder einen dritten Gehäuseabschnitt 130 umfassen. Der zweite Gehäuseabschnitt 120 kann mit dem ersten Gehäuseabschnitt 110 verbunden sein. Der dritte Gehäuseabschnitt 130 kann mit dem ersten Gehäuseabschnitt verbunden sein. Der zentrale erste Gehäuseabschnitt 110 kann zwischen dem zweiten Gehäuseabschnitt 120 und dem dritten Gehäuseabschnitt 130 angeordnet sein.

Der von der Laserquelle 200 erzeugte Bearbeitungslaserstrahl L kann über eine Lichtleitfaser von der Laserquelle 200 zu dem Laserbearbeitungskopf 100 übertragen werden. Über einen Faserkoppler 121 kann der Bearbeitungslaserstrahl L in den Laserbearbeitungskopf 100 eingekoppelt werden. Das Einkoppeln des Bearbeitungslaserstrahls L in den Laserbearbeitungskopf 100 kann in den zweiten Gehäuseabschnitt 120 erfolgen. Insbesondere kann der zweite Gehäuseabschnitt 120 eine Schnittstelle, beispielsweise den Faserkoppler 121, zum Einkoppeln des Bearbeitungslaserstrahls L in den Laserbearbeitungskopf 100 umfassen.

Der Laserbearbeitungskopf 100 kann ferner eine Kollimationsoptik 122 umfassen. Die Kollimationsoptik 122 kann in dem Laserbearbeitungskopf 100 so angeordnet und ausgebildet sein, dass der divergent in den Laserbearbeitungskopf 100 eintretende Bearbeitungslaserstrahl L kollimiert wird. Die Kollimationsoptik 122 kann zumindest abschnittsweise in dem ersten Gehäuseabschnitt 110 des Laserbearbeitungskopfs 100 angeordnet sein. Bevorzugt ist die Kollimationsoptik 122 vollständig in dem ersten Gehäuseabschnitt 110 des Laserbearbeitungskopfs 100 angeordnet. Gehalten wird die Kollimationsoptik von einer Halterung 123 oder in einer Kassette (nicht dargestellt). Auf einer freien Fläche der Halterung 123 bzw. Kassette kann eine weitere Klebefalle angeordnet sein.

Die Kollimationsoptik 122 kann zumindest eine Linse oder zwei oder mehr Linsen umfassen. Ein Abstand zwischen den zwei oder mehr Linsen kann einstellbar sein, insbesondere durch einen Elektromotor.

Ferner kann der Laserbearbeitungskopf 100 eine Fokussieroptik 132 umfassen. Die Fokussieroptik 132 kann in dem Laserbearbeitungskopf 100 so angeordnet und ausgebildet sein, dass der kollimierte Bearbeitungslaserstrahl L fokussiert wird. Die Fokussieroptik 132 kann zumindest abschnittsweise in dem ersten Gehäuseabschnitt 110 des Laserbearbeitungskopfs 100 angeordnet sein. Insbesondere ist die Fokussieroptik 132 vollständig in dem ersten Gehäuseabschnitt 110 des Laserbearbeitungskopfs 100 angeordnet. Gehalten wird die Fokussieroptik von einer Halterung 133 oder Kassette (nicht dargestellt). Auf einer freien Fläche der Halterung 133 kann eine weitere Klebefalle angeordnet sein.

Genau wie die Kollimationsoptik 122 kann auch die Fokussieroptik 132 zumindest eine Linse oder zwei oder mehr Linsen umfassen. Auch hier kann ein Abstand zwischen den zwei oder mehr Linsen einstellbar sein, insbesondere durch einen Elektromotor.

Der fokussierte Bearbeitungslaserstrahl L kann aus dem Laserbearbeitungskopf 100 ausgestrahlt werden und auf ein Werkstück W eingestrahlt werden, um das Werkstück W zu bearbeiten. Bevorzugt umfasst oder ist der dritte Gehäuseabschnitt 130 eine Düse 131, aus der der Bearbeitungslaserstrahl L ausgestrahlt wird.

Beispielsweise kann das Werkstück W geschweißt werden. Dabei können zwei Werkstücke W miteinander verschweißt werden oder ein Bauteil kann mit dem Werkstück W verschweißt werden. Ebenso kann das Werkstück W geschnitten, graviert oder gehärtet werden. Der Laserbearbeitungskopf 100 kann demnach ein Laserstrahlschweißkopf, ein Laserstrahlschneidkopf, ein Laserstrahlgravierkopf oder ein Laserstrahlhärtkopf sein.

Der Laserbearbeitungskopf 100 kann außerdem eine Linse, ein transmissives Element, ein reflektives Element, ein Strahlungsformungselement und/oder einen optischen Keil umfassen (nicht gezeigt).

Auch wenn in Bezug auf Fig. 1 die Klebefalle 111 auf einer Umfangsfläche bzw. Innenfläche des ersten Gehäuseteils 110 angeordnet ist, kann die Klebefalle 111 alternativ oder zusätzlich auf einer Umfangsfläche bzw. Innenfläche des zweiten und/oder dritten Gehäuseteils angeordnet sein. Ebenso kann eine Klebefalle 111' alternativ oder zusätzlich auf einer Fläche im Innenraum des Gehäuses angeordnet sein, die senkrecht zur Strahlausbreitungsrichtung des Bearbeitungslaserstrahls L verläuft.

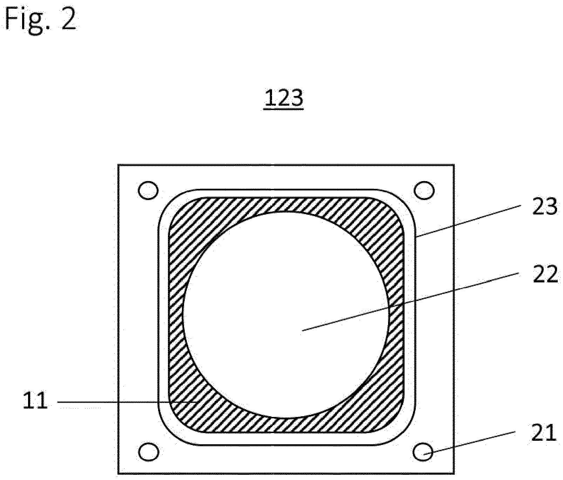

In Fig. 2 ist eine Halterung 123 der Kollimationsoptik 122 gezeigt. Die Halterung 123 weist eine umlaufende Nut bzw. Ringnut 23 und eine Öffnung 22 für den Durchtritt des Bearbeitungslaserstrahls L auf, in der die Kollimationsoptik 122 angeordnet ist. Des Weiteren kann die Halterung 123 Bohrungen 21 zur Befestigung der Halterung 123 am Gehäuse aufweisen. Eine Klebefalle 11 ist in einem Bereich innerhalb der umlaufenden Nut 23 auf der Halterung 123 angebracht. So wird vermieden, dass die Klebefalle die Nut bedeckt. Auch die Bohrungen 21 bleiben frei von der Klebefalle. Die Halterung 123 kann auch als Kassette bzw. Einschub ausgestaltet sein. Die dargestellte Halterung 123 kann insbesondere ein Boden einer Kassette sein, welche die Kollimationsoptik 122 enthält.

Durch die im Innenraum des Gehäuses, d.h. im Optikraum des Laserbearbeitungskopfs, angeordnete Klebefalle können freie Partikel immobilisiert und eine Verschmutzung von Optiken bzw. eine damit einhergehende Fokusverschiebung reduziert werden.

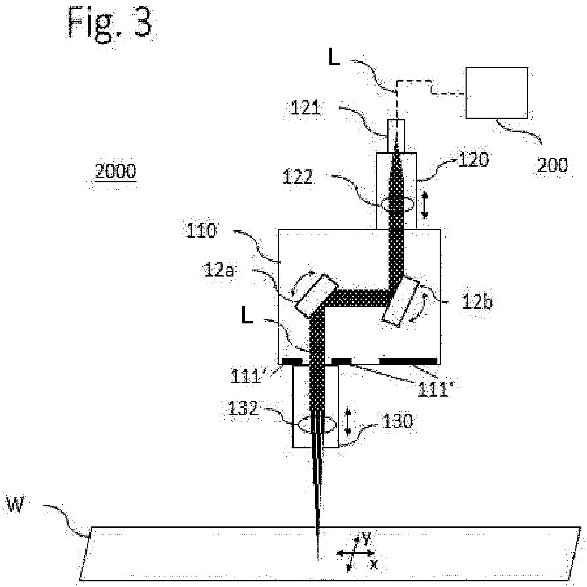

Bei dem in Fig. 3 gezeigten Laserbearbeitungssystem 2000 haben die Bezugszeichen die gleiche Bedeutung wie bei dem Laserbearbeitungssystem 1000 in Fig. 1. Im Unterschied zu dem Laserbearbeitungssystem 1000 ist der erste Gehäuseabschnitt 110 als Scannereinheit bzw. Ablenkvorrichtung ausgebildet. Die Ablenkvorrichtung umfasst zwei bewegliche Spiegel 12a, 12b, die um unterschiedliche Rotationsachsen drehbar sind. Die Ablenkvorrichtung ist somit eingerichtet, um den Bearbeitungslaserstrahl L bezüglich des Werkstücks W entlang zweier Achsen x, y zu bewegen und abzulenken. Die zwei Achsen x, y können gemäß Ausführungsformen zueinander senkrecht sein und parallel zu einer Oberfläche des Werkstücks W sein. Mithilfe der ersten Ablenkvorrichtung kann auf dem Werkstück W ein Bearbeitungspfad Bearbeitungslaserstrahl L abgefahren werden.

Um Partikel, die bei der Bewegung der Spiegel 12a, 12b erzeugt werden, zu immobilisieren, sind auf einer unteren Fläche im Innenraum des ersten Gehäuseabschnitts 110 unterhalb der Spiegel 12a, 12b Klebefallen 111' aufgebracht.

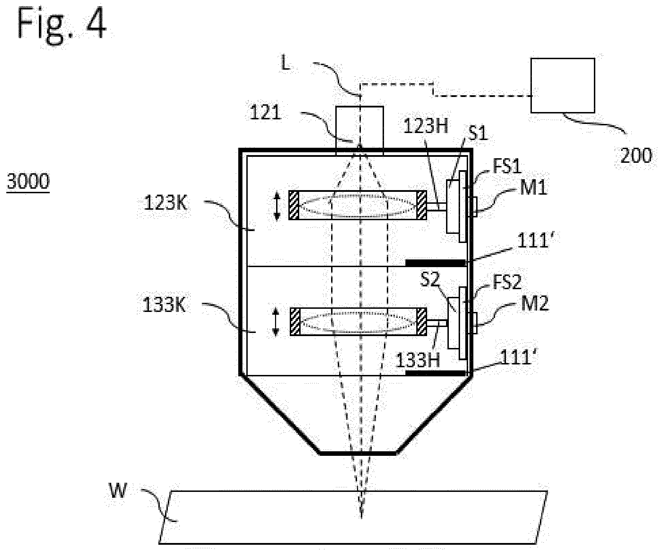

Fig. 4 zeigt ein Laserbearbeitungssystem 3000 umfassend eine Laserquelle 200. Der von der Laserquelle 200 erzeugte Bearbeitungslaserstrahl L kann über eine Lichtleitfaser von der Laserquelle 200 zu dem Laserbearbeitungskopf übertragen werden. Über einen Faserkoppler 121 kann der Bearbeitungslaserstrahl L in den Laserbearbeitungskopf eingekoppelt werden.

Der Laserbearbeitungskopf umfasst ein Gehäuse, in welches zwei Kassetten 123K und 133K eingeschoben sind. Die erste Kassette 123K enthält eine Kollimationsoptik. Die zweite Kassette 133K enthält eine Fokussieroptik. Sowohl die Kollimationsoptik als auch die Fokussieroptik weisen eine Halterung 123H, 133H auf, über die sie mit einem beweglichen Element, verbunden ist. Das bewegliche Element erlaubt es, die Optiken in der Höhe, d.h. parallel zur optischen Achse der Optik bzw. zur Ausbreitungsrichtung des Laserstrahls, zu verstellen.

Das bewegliche Element umfasst in dem illustrierten Beispiel einen Schlitten S1, S2 eines Bandantriebs, der von einem Motor M1, M2 antreibbar und an einer Führungsschiene FS1, FS2 verschiebbar geführt ist, umfassen.

Die Klebefallen 111' sind in Ausbreitungsrichtung des Laserstrahls unterhalb der Führungsschiene FS1, FS2 auf dem Boden der Kassetten 123K, 133K angeordnet. Abrieb, der durch Reibung im Bewegungsmechanismus S1-FS1-M1 und S2-FS2-M2 erzeugt wird, kann so direkt eingefangen werden. Dies erlaubt eine hochpräzise Bearbeitung eines Werkstücks W.

## Patentansprüche

1. Laserbearbeitungskopf umfassend
- ein Gehäuse (110, 120, 130),
- mindestens eine im Gehäuse enthaltene Optik zur Manipulation eines Laserstrahls (L),
wobei das Gehäuse (110, 120, 130) mindestens ein bewegliches Element (12a, 12b, S1, S2) mit einem Bewegungsmechanismus enthält, wobei das mindestens eine bewegliche Element (12a, 12b, S1, S2) Teil der Optik ist,
**gekennzeichnet durch**:
- mindestens eine Klebefalle (11, 111, 111'), die auf einer Fläche im Innenraum des Gehäuses zum Immobilisieren von Partikeln im Innenraum des Gehäuses angebracht ist,
wobei die Klebefalle eine doppelseitige Klebefolie umfasst,
wobei die Klebefalle (11, 111, 111') benachbart mit einem Abstand von kleiner als 10 cm zu dem Bewegungsmechanismus des beweglichen Elements (12a, 12b, S1, S2) angeordnet ist.

2. Laserbearbeitungskopf nach Anspruch 1, wobei die Klebefalle (11, 111, 111') eine Klebemittelschicht umfasst.

3. Laserbearbeitungskopf nach einem der vorhergehenden Ansprüche, wobei die Klebefalle (11, 111, 111') mindestens 20 Gew.-%, bevorzugt mindestens 30 Gew.-%, besonders bevorzugt mindestens 35 Gew.-% eines Acrylats enthält.

4. Laserbearbeitungskopf nach einem der vorhergehenden Ansprüche, wobei die Klebefalle (11, 111, 111') mindestens 20 Gew.-%, bevorzugt mindestens 30 Gew.-%, besonders bevorzugt mindestens 35 Gew.-% eines Polymers ausgewählt aus der Gruppe bestehend aus einem aromatischem Polyester, insbesondere PET, und einem Polyolefin, insbesondere Polypropylen, enthält.

5. Laserbearbeitungskopf nach einem der vorhergehenden Ansprüche, wobei die Klebefalle (11, 111, 111') eine Klebemittelschicht umfasst, die eine Schichtdicke im Bereich von 20 µm bis 5000 µm, bevorzugt im Bereich von 50 µm bis 1000 µm, und/oder eine konstante Schichtdicke aufweist.

6. Laserbearbeitungskopf nach einem der vorhergehenden Ansprüche, wobei die mindestens eine im Gehäuse enthaltene Optik ein Faserkoppler (121), eine Strahlführungsoptik, eine Strahlformungsoptik, eine Fokussieroptik (132) und/oder eine Kollimationsoptik (122) ist.

7. Laserbearbeitungskopf nach Anspruch 1, wobei die Optik in einer Halterung (123) angeordnet ist, und die Klebefalle (11)
(i) auf einer Oberfläche der Halterung, und/oder
(ii) auf einer unmittelbar an die Halterung angrenzenden Innenfläche des Gehäuses (110, 120, 130) aufgebracht ist.

8. Laserbearbeitungskopf nach einem der vorhergehenden Ansprüche, wobei mindestens eine Klebefalle (11, 111, 111') auf einer Fläche aufgebracht ist, die sich senkrecht zur optischen Achse der Optik und/oder zur Ausbreitungsrichtung des Laserstrahls (L) erstreckt, und/oder die einem Laserstrahleinkopplungspunkt zugewandt ist, und/oder die während der vorgesehenen Verwendung des Laserbearbeitungskopfs den Innenraum zumindest teilweise nach unten begrenzt.

9. Laserbearbeitungskopf nach einem der vorhergehenden Ansprüche, wobei mindestens eine Klebefalle (11, 111, 111') auf einer Fläche aufgebracht ist, die zumindest einen Teil einer Umfangsfläche des Innenraums bildet, und/oder die sich parallel zur optischen Achse der Optik und/oder zur Ausbreitungsrichtung des Laserstrahls (L) erstreckt.

10. Laserbearbeitungskopf nach einem der vorhergehenden Ansprüche, wobei die Fläche, auf der die Klebefalle (11, 111, 111') aufgebracht ist, planar oder gekrümmt ist.

11. Laserbearbeitungskopf nach einem der vorhergehenden Ansprüche, wobei mindestens eine Klebefalle (11) auf einer Fläche aufgebracht ist, die eine Ringnut (23) aufweist, und wobei die Klebefalle (11) von der Ringnut (23) umgeben ist.

12. Laserbearbeitungskopf nach einem der vorhergehenden Ansprüche, wobei mindestens eine Klebefalle (11) eine oder mehrere Aussparungen entsprechend einer oder mehrerer Öffnungen (22) zum Durchtritt des Laserstrahls (L) und/oder Bohrungen (21) in der Fläche, auf der die Klebefalle (11) aufgebracht ist, aufweist.

13. Laserbearbeitungskopf nach einem der vorhergehenden Ansprüche, wobei die Klebefalle (11, 111, 111') eine Fläche von 10 bis 500 cm² aufweist oder die Mehrzahl an Klebefallen (11, 111, 111') zusammen eine Gesamtfläche von 10 bis 500 cm² aufweisen, und/oder
wobei die Klebefalle mindestens eine Klebemittelschicht umfasst, die eine Fläche von mindestens 5 cm² aufweist.

## Claims

1. Laser processing head comprising
- a housing (110, 120, 130),
- at least one optics contained in the housing for manipulating a laser beam (L),
wherein the housing (110, 120, 130) contains at least one movable element (12a, 12b, S1, S2) with a movement mechanism, wherein the at least one movable element (12a, 12b, S1, S2) is part of the optics,
**characterized by**:
- at least one adhesive trap (11, 111, 111') mounted on a surface in the interior of the housing for immobilizing particles in the interior of the housing,
wherein the adhesive trap comprises a double-sided adhesive film,
wherein the adhesive trap (11, 111, 111') is arranged adjacent to the movement mechanism of the movable element (12a, 12b, S1, S2) with a distance of less than 10 cm.

2. Laser processing head according to claim 1, wherein the adhesive trap (11, 111, 111') comprises an adhesive layer.

3. Laser processing head according to one of the preceding claims, wherein the adhesive trap (11, 111, 111') contains at least 20 wt.%, preferably at least 30 wt.%, particularly preferably at least 35 wt.% of an acrylate.

4. Laser processing head according to one of the preceding claims, wherein the adhesive trap (11, 111, 111') contains at least 20 wt.%, preferably at least 30 wt.%, particularly preferably at least 35 wt.% of a polymer selected from the group consisting of an aromatic polyester, in particular PET, and a polyolefin, in particular polypropylene.

5. Laser processing head according to one of the preceding claims, wherein the adhesive trap (11, 111, 111') comprises an adhesive layer which has a layer thickness in the range of 20 µm to 5000 µm, preferably in the range of 50 µm to 1000 µm, and/or a constant layer thickness.

6. Laser processing head according to one of the preceding claims, wherein the at least one optics contained in the housing is a fiber coupler (121), a beam guiding optics, a beam shaping optics, a focusing optics (132) and/or a collimation optics (122).

7. Laser processing head according to claim 1, wherein the optics is arranged in a holder (123), and the adhesive trap (11)
(i) is arranged on a surface of the holder, and/or
(ii) is applied on an inner surface of the housing (110, 120, 130) directly adjacent to the holder.

8. Laser processing head according to one of the preceding claims, wherein at least one adhesive trap (11, 111, 111') is applied on a surface which extends perpendicularly to the optical axis of the optics and/or to the propagation direction of the laser beam (L), and/or which faces a laser beam coupling point, and/or which delimits the interior at least partially downwards during the intended use of the laser processing head.

9. Laser processing head according to one of the preceding claims, wherein at least one adhesive trap (11, 111, 111') is applied on a surface which forms at least part of a circumferential surface of the interior, and/or which extends parallel to the optical axis of the optics and/or to the propagation direction of the laser beam (L).

10. Laser processing head according to one of the preceding claims, wherein the surface on which the adhesive trap (11, 111, 111') is applied is planar or curved.

11. Laser processing head according to one of the preceding claims, wherein at least one adhesive trap (11) is applied on a surface which has an annular groove (23), and wherein the adhesive trap (11) is surrounded by the annular groove (23).

12. Laser processing head according to one of the preceding claims, wherein at least one adhesive trap (11) has one or more recesses corresponding to one or more openings (22) for the passage of the laser beam (L) and/or bores (21) in the surface on which the adhesive trap (11) is applied.

13. Laser processing head according to one of the preceding claims, wherein the adhesive trap (11, 111, 111') has a surface area of 10 to 500 cm² or the plurality of adhesive traps (11, 111, 111') together have a total surface area of 10 to 500 cm², and/or
wherein the adhesive trap comprises at least one adhesive layer which has a surface area of at least 5 cm².

## Revendications

1. Tête d'usinage au laser comprenant :
- un boîtier (110, 120, 130),
- au moins une optique contenue dans le boîtier pour la manipulation d'un faisceau laser (L),
dans laquelle le boîtier (110, 120, 130) contient au moins un élément mobile (12a, 12b, S1, S2) avec un mécanisme de mouvement, dans laquelle le au moins un élément mobile (12a, 12b, S1, S2) fait partie intégrante de l'optique,
**caractérisée par** :
- au moins un piège adhésif (11, 111, 111') qui est monté sur une face située dans l'espace intérieur du boîtier pour immobiliser des particules dans l'espace intérieur du boîtier,
dans laquelle le piège adhésif comprend un film adhésif à double face,
dans laquelle le piège adhésif (11 10, 111, 111') est disposé de façon contigüe à une distance inférieure à 10 cm du mécanisme de mouvement de l'élément mobile (12a, 12b, S1, S2).

2. Tête d'usinage au laser selon la revendication 1, dans laquelle le piège adhésif (11, 111, 111') comprend une couche d'adhésif.

3. Tête d'usinage au laser selon l'une des revendications précédentes, dans laquelle le piège adhésif (11, 111, 111') contient au moins 20 % en poids, de manière préférée au moins 30 % en poids, de manière particulièrement préférée au moins 35 % en poids d'un acrylate.

4. Tête d'usinage au laser selon l'une des revendications précédentes, dans laquelle le piège adhésif (11, 111, 111') contient au moins 20 % en poids, de manière préférée au moins 30 % en poids, de manière particulièrement préférée au moins 35 % en poids d'un polymère choisi parmi le groupe constitué d'un polyester aromatique, en particulier du PET, et d'une polyoléfine, en particulier du polypropylène.

5. Tête d'usinage au laser selon l'une des revendications précédentes, dans laquelle le piège adhésif (11, 111, 111') comprend une couche d'adhésif qui a une épaisseur de couche dans la plage de 20 µm à 5 000 µm, de préférence dans la plage de 50 µm à 1 000 µm, et/ou a une épaisseur de couche constante.

6. Tête d'usinage au laser selon l'une des revendications précédentes, dans laquelle la au moins une optique contenue dans le boîtier est un coupleur de fibres (121), une optique de guidage de faisceau, une optique de conformation de faisceau, une optique de focalisation (132) et/ou une optique de collimation (122).

7. Tête d'usinage au laser selon la revendication 1, dans laquelle l'optique est disposée dans un support (123) et le piège adhésif (11) est appliqué
(I) sur une surface du support, et/ou
(II) sur une face interne du boîtier (110, 120, 130) directement adjacente au support.

8. Tête d'usinage au laser selon l'une des revendications précédentes, dans laquelle au moins un piège adhésif (11, 111, 111') est appliqué sur une face qui s'étend perpendiculairement à l'axe optique de l'optique et/ou à la direction de propagation du faisceau laser (L) et/ou qui est dirigée vers un point de couplage de faisceau laser et/ou qui, pendant l'utilisation prévue de la tête d'usinage au laser, délimite au moins partiellement l'espace intérieur vers le bas.

9. Tête d'usinage au laser selon l'une des revendications précédentes, dans laquelle au moins un piège adhésif (11, 111, 111') est appliqué sur une face qui forme au moins une partie d'une surface circonférentielle de l'espace intérieur et/ou qui s'étend parallèlement à l'axe optique de l'optique et/ou à la direction de propagation du faisceau laser (L).

10. Tête d'usinage au laser selon l'une des revendications précédentes, dans laquelle la face sur laquelle le piège adhésif (11, 111, 111') est appliqué est plane ou courbe.

11. Tête d'usinage au laser selon l'une des revendications précédentes, dans laquelle au moins un piège adhésif (11) est appliqué sur une face qui comporte une gorge annulaire (23) et dans laquelle le piège adhésif (11) est entouré par la gorge annulaire (23).

12. Tête d'usinage au laser selon l'une des revendications précédentes, dans laquelle au moins un piège adhésif (11) comporte un ou plusieurs évidements correspondant à une ou plusieurs ouvertures (22) pour le passage du faisceau laser (L) à travers celles-ci et/ou des trous (21) dans la face sur laquelle le piège adhésif (11) est appliqué.

13. Tête d'usinage au laser selon l'une des revendications précédentes, dans laquelle le piège adhésif (11, 111, 111') a une aire de 10 à 500 cm² ou la pluralité de pièges adhésifs (11, 111, 111') ont ensemble une aire totale de 10 à 500 cm^{2,} et/ou
dans laquelle le piège adhésif comprend au moins une couche d'adhésif qui a une aire d'au moins 5 cm².
